# EUROPÄISCHE PATENTANMELDUNG

(11) **EP 1 842 467 A2**
(43) Veröffentlichungstag der Anmeldung: **10.10.2007**
(21) Anmeldenummer: 07105889.5
(22) Anmeldetag: 10.04.2007
(51) Int. Cl.: A47J 31/40

(54) **Vorrichtung und Verfahren zur portionsweisen Herstellung eines Aromagetränks**

(30) Priorität: 07.04.2006 DE 102006016421
(71) Anmelder: Wiesauplast Kunststoff und Formenbau GmbH & Co. KG, 95676 Wiesau (DE)
(72) Erfinder: Schuster, Thomas, 5310 Mondsee (AT); Mühlbacher, Peter, 5020 Salzburg (AT)
(74) Vertreter: Stoffregen, Hans-Herbert

(57) **Zusammenfassung**

Die Erfindung bezieht sich auf eine Vorrichtung (10, 100) und ein Verfahren zur portionsweisen Herstellung eines Aromagetränks, insbesondere Espresso oder Kaffee, umfassend eine Brühkammer mit einem Aufnahmeteil (12, 112) zur Aufnahme einer mit einem Aromaträger gefüllten Kapsel (16, 116) und einem Verschlussteil (14, 114), wobei das Aufnahmeteil (12, 112) und das Verschlussteil (14, 114) relativ zueinander bewegbar angeordnet und aus einer Öffnungsstellung in eine Schließstellung bringbar sind, wobei die Brühkammer nach dem Schließen bis zu einem Zulauf (42, 118) für Heißwasser zur Extraktion des Aromaträgers und einem Auslauf (34, 120) für das A-romagetränk allseitig abgedichtet ist. Eine Einfache und Benutzerfreundliche Handhabung wird dadurch erreicht, dass das Aufnahmeteil (12, 112) für die Kapsel (16, 116) aus einer horizontalen Grundstellung in eine vertikale Stellung verschwenkbar ist, dass das Verschlussteil (14, 114) zum Verschließen der Brühkammer in Richtung des Aufnahmeteils (12,112) linear verschiebbar angeordnet ist und dass die Kapsel (16, 116) nach dem Öffnen der Brühkammer durch ein an dem Verschlussteil (14, 114) angeordnetes Mittel (68, 216) erfassbar und durch eine lineare Rückbewegung aus dem Aufnahmeteil (12, 112) entnehmbar und sodann in einen Aufnahmebehälter (70) auswerfbar ist.

## Beschreibung

Die Erfindung bezieht sich auf eine Vorrichtung und ein Verfahren zur portionsweisen Herstellung eines Aromagetränks insbesondere von Espresso oder Kaffee nach dem Oberbegriff des Anspruchs 1.

Eine Vorrichtung zur Herstellung eines Aromagetränks, auf das sich die Erfindung bezieht, ist in der DE 202 17 411 U1 beschrieben. Diese weist eine Brühkammer zur Aufnahme einer mit einem Aromaträger gefüllten Portionspackung auf, wobei die Brühkammer aus einem ortsfesten Teil und einem entgegen einer Öffnungsstellung und einer Schließstellung beweglichen Aufnahmeteil für eine Portionspackung besteht. Nach dem Einlegen einer Portionspackung und dem Schließen ist diese bis zu einem Zulauf für Heißwasser zur Extraktion des Aromaträgers und einem Auslauf für das Aromagetränk allseitig abgedichtet. Beim Schließen der Brühkammer wird die Portionspackung gegen einen hinteren Anschlag gedrückt, der die Portionspackung in eine vorbestimmte Lage innerhalb der Brühkammer bewegt. Die Portionspackung ist somit formschlüssig zentriert in der Brühkammer aufgenommen.

Zum Entfernen einer gebrauchten Portionspackung ist an dem ortsfesten Teil ein nach unten hervorstehender Abstreifer vorgesehen. Durch das Bewegen des Einschubs nach außen greift der Abstreifer mit einem Steg durch einen Schlitz innerhalb der Seitenwand des Einschubes und drückt gegen die dem Schlitz gegenüberliegende Seitenwand der Portionspackung, bis die Portionspackung aus dem Auflagebereich verschoben wird und nach unten fällt oder einer Entsorgungsstation zugeführt wird.

Die DE 698 07 359 T2 bezieht sich auf eine Brühkammer für einen Automaten zum Zubereiten von heißen Getränken. Dabei besteht die Extraktionskammer aus zwei in horizontaler Ebene beweglichen Teilen, die sich gegenseitig annähern oder voneinander entfernen können, um die Extraktionskammer zu öffnen oder zu schließen. Die beiden in der horizontalen Ebene beweglichen Teile sind außerdem um ihre Querachse in senkrechter Richtung drehbar gelagert, wobei die Bewegungen der beiden beweglichen Teile, die die Extraktionskammer bilden, in der Weise aufeinander abgestimmt sind, dass sie sich in entgegengesetzter Richtung drehen, um die Kammer nach oben hin zu öffnen, um die Dosis aufzunehmen, sich wieder annähern und die Extraktionskammer während der Extraktionsphase zu schließen und schließlich die Kammer nach unten hin zu öffnen, um die benutzte Dosis oder Tablette durch Schwerkraft herausfallen zu lassen.

In der DE 10 2004 002 004 A1 ist eine Kaffeemaschine zum Aufbrühen von in einer Kapsel abgepacktem Pulverkaffee beschrieben. Die Kaffeemaschine ist mit einer Brühkammer mit zumindest einem Aufstechmittel zum Aufstechen der Kapsel sowie einer Pumpe zum zwangsweisen Zuführen des Brühwassers versehen. Die Brühkammer weist ein topfförmiges Unterteil zur Aufnahme der Kapsel und ein tellerförmiges Oberteil zum Verschließen der Brühkammer auf. Sowohl in dem topfförmigen Unterteil als auch in dem deckelförmigen Oberteil ist jeweils ein Aufstechmittel angeordnet, welches die Unterseite bzw. Oberseite der Kapsel durchdringt. Bei dieser Ausführungsform muss die Kapsel per Hand aus dem Brühkammerunterteil entnommen werden.

Davon ausgehend liegt der vorliegenden Erfindung die Aufgabe zu Grunde, eine Vorrichtung und ein Verfahren zur portionsweisen Herstellung eines Aromagetränks der eingangs genannten Art derart weiterzubilden, dass bei kompaktem Aufbau eine einfache Handhabung unter Bereitstellung eines zuverlässigen Auswurfs verbrauchter Kapseln erreicht wird.

Die Aufgabe wird erfindungsgemäß dadurch gelöst, dass das Aufnahmeteil für die Kapsel aus einer horizontalen Grundstellung in eine vertikale Stellung schwenkbar ist, dass das Verschlussteil zum Verschließen der Brühkammer in Richtung des Aufnahmeteils linear verschiebbar angeordnet ist und dass die Kapsel nach dem Öffnen der Brühkammer durch an dem Verschlussteil angeordnete Mittel erfassbar ist und durch eine lineare Rückbewegung aus dem Aufnahmeteil entnehmbar und sodann in einen Aufnahmebehälter auswerfbar ist.

Gegenüber dem Stand der Technik wird der Vorteil erreicht, dass bei einem kompakten Aufbau eine einfache Handhabung der Vorrichtung gewährleistet ist, ohne dass die Kapsel nach Zubereitung des Aromagetränks aus der Vorrichtung entnommen werden muss.

In einer bevorzugten Ausführungsform ist vorgesehen, dass das Aufnahmeteil über eine Kulisse mit einem Hebel gekoppelt ist, wobei durch Betätigen des Hebels zunächst die Schwenkbewegung des Aufnahmeteils einleitbar ist und dass der Hebel über einen zweiten Hebelmechanismus mit dem Verschlussteil gekoppelt ist, wobei eine weitere Betätigung des Hebels eine lineare Bewegung des Verschlussteils in Richtung des Aufnahmeteils zum Verschließen der Brühkammer bewirkt, und wobei eine Rückbewegung des Hebels das Öffnen der Brühkammer und die erneute Rückbewegung des Verschlussteils und die Schwenkbewegung des Aufnahmeteils in die Grundstellung bewirkt.

Durch eine einzige Hebelbetätigung wird somit die Brühkammer verschlossen und nach Beendigung des Brühvorgangs die Kapsel entsorgt.

Damit die Brühkammer hohen Extraktionsdrücken im Bereich von 5 bis 20 bar vorzugsweise 10 bar standhält, ist das Verschlussteil im geschlossenen Zustand über ein Verschlusssystem mit dem Aufnahmeteil gekoppelt bzw. verschlossen. Dadurch wird eine besonders hohe Festigkeit der Brühkammer sowie eine Parallelität von angrenzenden Flächen insbesondere zwischen Verschlussteil, Kapsel sowie Aufnahmeteil erreicht.

In bevorzugter Ausführungsform weist das Verschlusssystem sich von dem Verschlussteil in Richtung des Aufnahmeteils erstreckende vorzugsweise hakenförmige Verschlusselemente auf, welche mit von der Aufnahme sich radial erstreckenden Zapfen eine kraft- und formschlüssige Verbindung bilden.

Dabei ist vorgesehen, dass die Zapfen sich radial von einem Verschlussring erstrecken, welche am öffnungsseitigen Randbereich des Aufnahmeteils drehbar gelagert ist.

Vorzugswiese ist der Verschlussring zwischen einem außen umlaufenden Rand des Aufnahmeteils und einem Haltering drehbar gelagert, wobei der Verschlussring federvorgespannt aus einer Ausgangsstellung in eine Endstellung (Verschlussstellung) und zurück bewegbar ist.

Um einen automatischen Verschluss der Brühkammer zu gewährleisten, weist der mit dem Verschlussteil gekoppelte zweite Hebelmechanismus ein Eingriffsmittel wie Finger auf, welches während der linearen Vorwätsbewegung in eine Aufnahme wie Gabel des Verschlussrings eingreift und eine Drehung des Verschlussrings derart bewirkt, dass die Zapfen in die hakenförmigen Verschlusselemente eingreifen. Hierbei ist zu erwähnen, dass die Drehung des Verschlussrings erst dann erfolgt, wenn die Linearbewegung abgeschlossen ist.

Des Weiteren ist vorgesehen, dass der das Verschlussteil mit dem Hebel koppelnde Hebelmechanismus als Kniehebel ausgebildet ist, welcher die Linearbewegung des Verschlussteils bewirkt und in seiner Endposition einrastet.

In bevorzugter Ausführungsform weist der Kniehebel einen kurzen Hebelarm auf, welcher über einen Schieber sowie einen kurzen Ausleger mit dem Hebel verbunden ist und einen längeren Hebelarm, welcher über vorzugsweise einen Nutstein in einer vertikal verlaufenden Nut des Verschlussteils angeordnet ist, wobei an einem in der Nut verlaufenden Ende des längeren Hebelarms das Eingriffsmittel wie Finger angeordnet ist, welcher in die Aufnahme wie Gabel des Verschlussrings eingreift.

Der Hebelmechanismus ist derart ausgebildet, dass die Heranführung des Verschlussteils an das Aufnahmeteil nach dem Schwenken dieses zeitverzögert erfolgt.

Des Weiteren ist vorgesehen, dass sowohl in dem Aufnahmeteil als auch in dem Verschlussteil ein Anstechdorn für das Aufstechen der Kapsel an der Ober- und Unterseite vorgesehen ist.

Zur Entnahme der Kapsel aus dem Aufnahmeteil während der linearen Rückbewegung des Verschlussteils sind an diesem Mittel zum Entnehmen der Kapsel angeordnet.

Die Mittel zum Entnehmen der Kapsel sind vorzugsweise als Widerhaken ausgebildet, welche die Kapsel aus dem Aufnahmeteil ziehen und ein durch Schwerkraft bedingtes Runterfallen der Kapsel in einen Auffangbehälter bewirken.

Damit die Kapsel in dem Aufnahmeteil boden- sowie randseitig bündig anliegt ist vorgesehen, dass das Aufnahmeteil in einer schwenkbaren Halterung entlang einer Längsachse federvorgespannt verschiebbar aufgenommen ist. Dabei ist das Aufnahmeteil bodenseitig mit einer Durchbrechung für den von einer Bodenfläche der Halterung ausgehenden Anstechdorn versehen. Eine Spitze des Anstechdorns ist in geöffneter Stellung der Brühkammer unterhalb des Bodenniveaus der Aufnahme und in geschlossener Stellung innerhalb des Aufnahmeteils beim Anstechen bzw. Ausstechen des Kapselbodens.

Damit die Halterung für das Aufnahmeteil bei der linearen Rückbewegung des Verschlussteils nicht sofort in die Grundstellung zurückschnellt, ist die Halterung in ihrer geschwenkten Stellung mittels eines Verriegelungselementes wie Bolzen verriegelbar, wobei ebenfalls ein Entriegelungselement vorgesehen ist, mit dem die Halterung unmittelbar nach Entnahme der Kapsel entriegelbar und in ihre Ausgangsstellung zurückschwenkbar ist. Dabei wird die Schwenkbewegung durch einen Rotationsdämpfer gedämpft.

In bevorzugter Ausführung greift der Bolzen federvorgespannt mittels eines Federelementes wie Blattfeder in eine in der Halterung angeordnete Öffnung ein, wobei der Bolzen bzw. die Blattfeder mittels dem mit dem zweiten Hebelmechanismus gekoppelten Entriegelungselement entriegelbar ist. Der Bolzen ist dabei axial verschiebbar gelegert.

Um einen flächenmäßigen Andruck des Verriegelungsteils an dem Aufnahmeteil zu gewährleisten gehen die Verschlusshaken von einer Hakenplatte aus, wobei in dem Verschlussteil randseitig zur Durchführung der Verschlusselemente Durchbrechungen angebracht sind und wobei die Platte, von der die Haken ausgehen, auf einer Rückseite des Verschlussteils anliegen.

Ferner ist vorgesehen, dass das Verschlussteil zumindest einen Auswerfer in Form eines axial verschließbaren Stößels aufweist, welcher bei der Bewegung zum Aufnahmeteil hin bündig mit einer Oberfläche des Verschlussteils abschließt und bei einer Rückbewegung des Verschlussteils gegen Ende der Bewegung gegen einen Anschlag anstößt, wodurch die Kapsel von dem Anstechdorn abgestreift wird und schwerkraftbedingt in einen Aufnahmebehälter fällt.

Vorzugsweise ist der Auswerfer unterhalb des Anstechdorns angeordnet. Bevorzugterweise können auch zwei Auswerfer vorgesehen sein, wobei ein erster Auswerfer oberhalb des Anstechdorns und ein zweiter Auswerfer unterhalb des Anstechdorns angeordnet ist. Der untere Auswerfer ist vorzugsweise 2-3mm vorauseilend.

Damit dem Anstechdorn die Wirkung eines Widerhakens zukommt, weist dieser eine kegelförmige Spitze auf. Diese kann mit einem Längsschnitt versehen sein, in dem eine Klinge, vorzugsweise dreieckförmige Klinge, aufnehmbar ist. Die Spitze mit Klinge bilden sodann einen Widerhaken. Die Klinge kann auch als einstückiger Bestandteil der Spitze ausgebildet sein.

Um eine spielfreie Lagerung des Hebels und dadurch eine synchrone Bewegung des internen Hebelmechanismus zu gewährleisten, ist der Hebel über eine Konuslagerhülse spielfrei mit dem ersten Hebelmechanismus kraftschlüssig gekoppelt, wobei jeweils eine erste Konusfläche der Konuslagerhülse in eine Konusfläche eines Hebelauges des Hebels und eine zweite Konusfläche in eine Korrespondierende Konusfläche des Hebelmechanismus eingreift. Die Konuslagerhülse wird über ein Spannelement wie Spannschraube axial fixiert. Des Weiteren ist vorzugsweise zwischen Gehäusewandung und Hebel bzw. zwischen Gehäusewandung und Hebelmechanismus ein O-Ring angeordnet, um die Spielfreiheit zu gewährleisten.

Zur Zuführung von heißem Wasser ist vorgesehen, dass das Verschlussteil einen Anschluss für eine Heißwasserzuleitung und das Aufnahmeteil einen Anschluss für eine Ablaufleitung für das Aromagetränk aufweist.

Des Weiteren weist die Vorrichtung einen Wassertank auf, welcher ein Tankventil mit einem integrierten Sieb, vorzugsweise Metallsieb aufweist. Gemäß bevorzugter Ausführungsform ist das Sieb herausnehmbar ausgebildet und in einem im Tank befindlichen Abschnitt des Ventils angeordnet.

Ein Verbindungselement zweier Schläuche zeichnet sich dadurch aus, dass in beiden Schläuchen eine Hülse eingesetzt ist und außen auf jedem Schlauch, im Bereich dieser Hülse, ein Ring gepresst ist, wobei auf den Schlauch stirnseitig am Ring anstehend ein O-Ring aufgeschoben ist, wobei diese Schlauchenden in ein Verbindungselement einsteckbar sind, in dem diese durch Einschieben einer Klammer hinter dem Ring gegen Herausziehen bzw. Herausfallen durch ein Systemdruck geschützt sind. Vorzugsweise besteht das Verbindungselement aus Kunststoff.

Des Weiteren ist vorgesehen, dass die Vorrichtung einen Temperaturfühler aufweist, welcher in ein Schlauchverbindungselement mittels eines Bajonettverschlusses eingesetzt und gehalten ist.

Ferner weist die Vorrichtung in einer Zuleitung zu dem Verschlusselement ein Rückstauventil auf, umfassend ein federbelastetes Kugeldruckstück, welches einem Druck bis zu 5 bar standhält und bei Erreichen eines Nenndruckes öffnet. Hierdurch wird erreicht, dass zum einen der Eintritt von Wasser in die Brühgruppe vor Erreichen der Nenntemperatur und zum anderen das Austreten von Dampf durch die Brühgruppe bei geöffnetem Dampfweg vermieden werden.

Schließlich weist die Vorrichtung eine Milchschäumeinrichtung auf, umfassend eine Düse, in die Dampf einleitbar ist, wobei durch die Düse durch einen Nebenkanal Milch ansaugbar und in einer Kammer verwirbelbar ist, so dass am Austritt die Milch in aufgeschäumter Form austritt.

Die Erfindung bezieht sich auch auf ein Verfahren zur portionsweisen Herstellung eines Aromagetränks insbesondere von Espresso oder Kaffee, wobei eine mit einem Aromaträger gefüllte Kapsel in ein Aufnahmeteil einer Brühkammer eingelegt und sodann die Brühkammer mittels eines Verschlussteils verschlossen wird, wobei das Verschließen und Öffnen der Brühkammer durch Relativbewegung des Aufnahmeteils und des Verschlussteils zueinander erfolgt und wobei die Brühkammer nach dem Schließen bis auf einen Zulauf für Heißwasser zur Extraktion des Aromagetränks und einen Auslauf für das Aromagetränk allseitig abgedichtet ist. Dieses zeichnet sich dadurch aus, dass das Aufnahmeteil für die Kapsel aus einer horizontalen Grundstellung mittels eines Hebels in eine vertikale Stellung geschwenkt wird, dass das Verschlussteil zum Verschließen der Brühkammer in Richtung des Aufnahmeteils linear verschoben wird und dass das Verschlussteil durch Rückbewegung des Hebels nach dem Brühvorgang in einer Linearbewegung von dem Aufnahmeteil wegebewegt wird, dass die Kapsel nach dem Öffnen der Brühkammer durch an dem Verschlussteil angeordnete Mittel erfasst und durch eine lineare Rückbewegung des Verschlussteils aus dem Aufnahmeteil entnommen und sodann in einen Aufnahmebehälter ausgeworfen wird. Die Extraktion des Aromagetränks erfolgt bei einem Druck im Bereich von 5 bis 15 bar, vorzugsweise 10 bar.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine perspektivische Schnittdarstellung der Brühgruppe in Grundstellung,
- Fig. 2: eine perspektivische Schnittdarstellung der Brühgruppe in Grundstellung mit eingelegter Kapsel,
- Fig. 3: eine perspektivische Schnittdarstellung der Brühgruppe mit geschwenktem Aufnahmeteil und linear verschobenem Verschlussteil,
- Fig. 4: eine perspektivische Schnittdarstellung der verschlossenen Brühgruppe,
- Fig. 5: eine perspektivische Schnittdarstellung der Brühgruppe in geöffnetem Zustand mit ausgeworfener Kapsel,
- Fig. 6: eine Seitenansicht der Vorrichtung zum Aufbrühen eines Aromagetränks,
- Fig. 7: eine perspektivische Darstellung einer zweiten Ausführungsform einer Brühgruppe in Grundstellung mit eingelegter Kapsel in geöffneter Stellung,
- Fig. 8: eine perspektivische Darstellung der Brühgruppe gemäß Fig. 7 mit geschwenktem Aufnahmeteil und linear verschobenem Verschlussteil in verschlossener Stellung,
- Fig. 9: eine perspektivische Darstellung eines Verschlusssystems für die Brühgruppe,
- Fig. 10: eine perspektivische Darstellung eines Verriegelungsmechanismus für die verschwenkbare Halterung des Aufnahmeteils,
- Fig. 11: eine perspektivische Darstellung des Verschlussteils mit Verschlusshaken, Anstechspitze und Auswerfer,
- Fig. 12: eine perspektivische Schnittdarstellung der Hebellagerung.

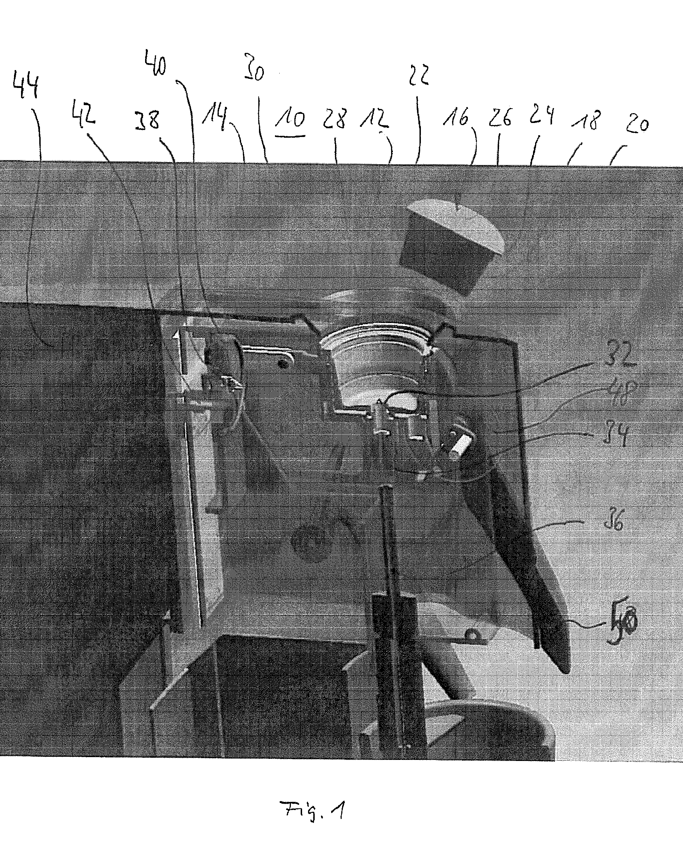

Fig. 1 zeigt in perspektivischer Schnittdarstellung eine Vorrichtung 10 zur portionsweisen Herstellung eines Aromagetränks, insbesondere von Espresso oder Kaffee. Die Vorrichtung 10 umfasst eine aus einem Aufnahmeteil 12 und einem Verschlussteil 14 bestehende Brühgruppe bzw. Brühkammer, wobei das Aufnahmeteil 12 zur Aufnahme einer mit einem Aromaträger gefüllten Kapsel 16 ausgebildet ist.

Die Kapsel 16 umfasst ein topfartiges Unterteil 18 mit einem Boden 20 und einer umlaufenden Seitenwand 22 mit einem am oberen Ende der Seitenwand sich parallel zur Bodenfläche nach außen erstreckenden Rand 24 und aus einem Deckel 26, der auf dem Rand 24 des Unterteils 18 aufliegt und mit diesem verbunden ist.

Eine Innenwandung 28 des Aufnahmeteils 12 ist an die Seitenwand 22 der Kapsel angepasst. Der sich nach außen erstreckende Rand 24 der Kapsel liegt auf einen oberen Rand 30 des Aufnahmeteils 12 auf. Bodenseitig ist innerhalb des Aufnahmeteils 12 ein sich nach innen erstreckender Anstechdorn 32 zum Anstechen der Bodenfläche 20 der Kapsel 16 angeordnet. Der Anstechdorn 32 ist über eine flexible Leitung 34 mit einem Auslauf 36 verbunden, über den das Aromagetränk entnehmbar ist.

Das Verschlussteil 14 weist ebenfalls einen Anstechdorn 38 zum Anstechen des Deckels 26 auf. Ferner ist ein randseitig umlaufendes Dichtelement 40 vorgesehen, welches die aus Aufnahmeteil 12 und Verschlussteil 14 gebildete Brühkammer abdichtet. Des Weiteren ist das Verschlussteil 14 über eine flexible Zuleitung 42 mit einem Wassertank 44 zur Zuführung von heißem und unter Druck stehendem Wasser versehen.

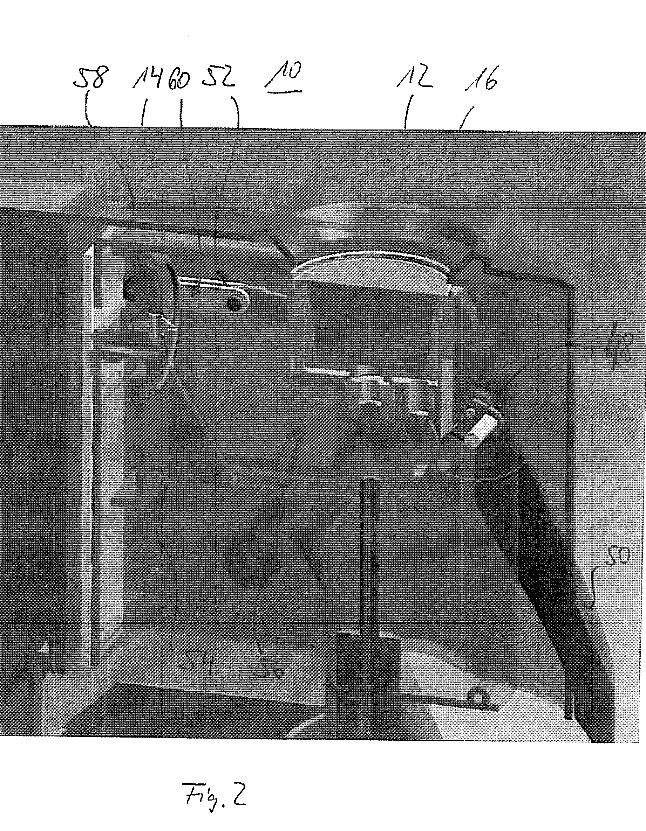

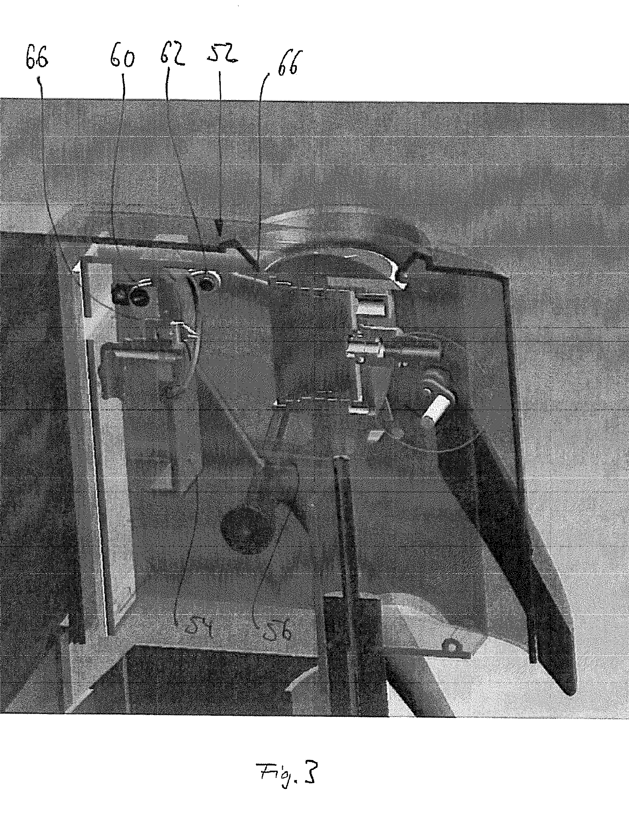

Fig. 2 zeigt eine perspektivische Schnittdarstellung der Vorrichtung 10, wobei die Kapsel 16 in das Aufnahmeteil 12 eingelegt ist. Das Aufnahmeteil 12 ist um seine Längsachse schwenkbar gelagert und über einen Hebelmechanismus 48 mit einem an der Vorderseite der Vorrichtung angeordneten Hebel 50 gekoppelt, über den das Aufnahmeteil 12 aus der in Fig. 2 dargestellten horizontalen Grundposition in eine in Fig. 3 dargestellte vertikale Lage verschwenkbar ist.

Dabei ist der Hebelmechanismus 48 als eine Kulisse ausgebildet, wie sie beispielsweise auch aus Stempeln bekannt ist.

Des Weiteren ist der Hebel 50 über einen zweiten Hebelmechanismus 52 ist dem in horizontaler Richtung linear verschiebbaren Verschlussteil 14 gekoppelt. Das Verschlussteil 14 ist an einem Träger 54 angeordnet, der in Führungen 56, 58 linear verschiebbar ist. Der Hebelmechanismus 52 umfasst einen Kniehebel 60, mit einem kurzen Hebelarm 62, welcher über einen Ausleger 66 mit dem Hebel 50 verbunden ist und einen längeren Hebelarm 68, der mit dem Träger 54 gekoppelt ist.

Nachfolgend soll die Funktion der Vorrichtung zur portionsweisen Herstellung eines Aromagetränks beschrieben werden. Wie in Fig. 1 dargestellt, wird die Kapsel 16 mit dem Boden 20 nach unten und dem Deckel 26, vorzugsweise ein Foliendeckel, nach oben in das Aufnahmeteil 12 eingelegt.

Nach dem Einlegen wird der Hebel 50 an der Vorderseite der Vorrichtung 10 nach unten gedrückt. Dies bewirkt eine Schwenkbewegung des Aufnahmeteils 12 durch die Kulisse 48 aus der dargestellten horizontalen Lage in eine in Fig. 3 dargestellte vertikale Lage des Aufnahmeteils 12.

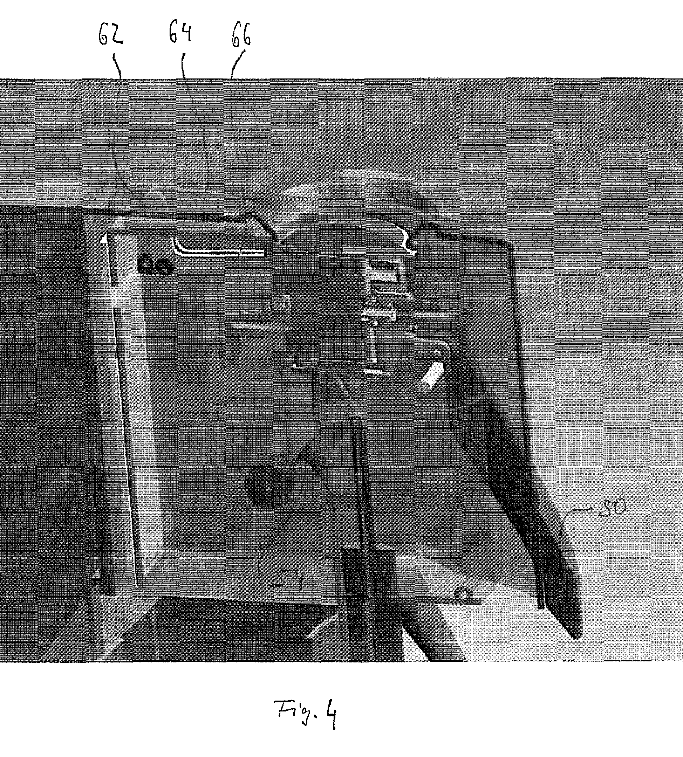

Außerdem wird, jedoch zeitverzögert, das Verschlussteil 14 durch weiteres Drücken des Hebels 50 linear zum Aufnahmeteil 12 herangeführt, wie dies in Fig. 3 dargestellt ist. Schließlich wird die Brühkammer geschlossen, was in Fig. 4 dargestellt ist. Diese Bewegung wird durch den Kniehebel 60 und den Ausleger 66 erzeugt und endet in der für den Kniehebel 60 typischen gestreckten Einrastposition. Durch die in dem Aufnahmeteil 12 und dem Verschlussteil 14 angeordneten Anstechdorne 32, 38 erfolgt ein Anstechen der Kapsel 16 and er Oberseite 26 und der Unterseite 20.

In diesem geschlossenen Zustand, der in Fig. 4 dargestellt ist, wird nun heißes Wasser mit einem Druck im Bereich von 5 bar bis 15 bar, vorzugsweise 10 bar durch das Verschlussteil 14 in die Kapsel 16 gepresst. Die extrahierte Aromaflüssigkeit wie Kaffee tritt dann an der Unterseite des Aufnahmeteils, d. h. dem Auslass 34, aus und fließt durch den Schlauch 36 ab.

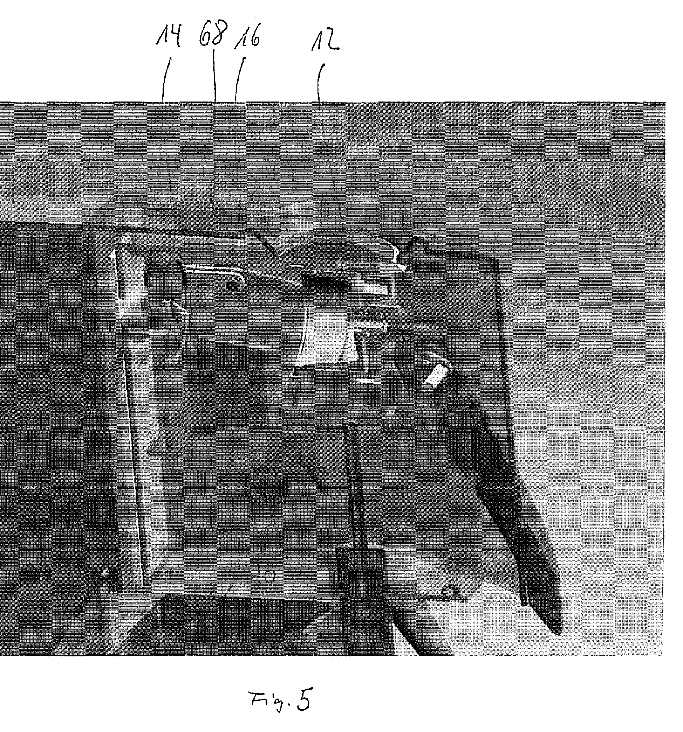

Es wird nun der Hebel 50 an der Vorderseite der Vorrichtung wieder nach oben gedrückt. Dadurch wird zuerst das Verschlussteil 14 linear von dem Aufnahmeteil wegbewegt, wie dies in Fig. 5 dargestellt ist.

An dem Verschlussteil 14 sind Mitnehmer 68 in Form von Widerhaken, durch welche die Kapsel 16 aus dem Aufnahmeteil 12 herausgezogen und somit ein schwerkraftbedingtes Herunterfallen der Kapsel 16 in einen Kapselbehälter 70 verursacht wird. In den letzten Zügen der linearen Bewegung des Verschlussteils 14 dreht sich das Aufnahmeteil 12 wieder in die ursprüngliche Ausgangsposition zurück, wie in Fig. 1 dargestellt.

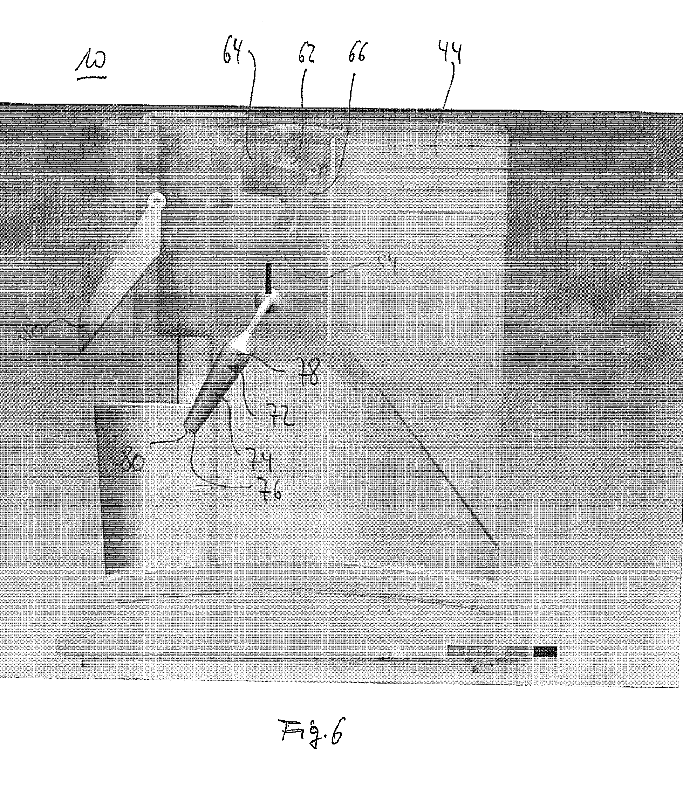

Fig. 6 zeigt eine Seitenansicht der Vorrichtung 10, die zusätzlich zu der aus Aufnahmeteil 12 und Verschlussteil 14 bestehenden Brühkammer einen Milchaufschäumer 72 aufweist. Dabei wird Dampf in eine Düse 74 eingeleitet, welche durch einen Nebenkanal 76 Milch ansaugt und in einer Kammer 78 verwirbelt, so dass am Austritt 80 die Milch in aufgeschäumter Form austritt.

Das Verschlussteil 14 ist über den Anschluss 42 und die Zuleitung mit dem Wassertank 44 verbunden, wobei in dem Tank ein Wasseranschlussstück angeordnet ist. In diesem befindet sich ein kleines Sieb, vorzugsweise Metallsieb, direkt in dem im Tank 54 befindlichen Teil des Tankventils. Dies kann herausgenommen und gereinigt werden.

Ferner ist zum Verbinden zweier Schläuche ein Verbindungselement vorgesehen, wobei in beide Schläuche eine Hülse eingesetzt und außen auf jeden Schlauch im Bereich dieser Hülse ein Ring gepresst wird. Zuletzt wird an den Schlauch (stirnseitig am Ring anstehend) ein O-Ring aufgeschoben. Diese konfektionierten Schlauchenden werden dann in das Verbindungselement aus Kunststoff gesteckt, wo diese durch ein Schieben einer Klammer hinter den Ring gegen das Herausziehen bzw. Herausfallen durch den Systemdruck geschützt werden.

Ferner ist ein Temperaturfühler vorgesehen (nicht dargestellt), welcher in ein Schlauchverbindungselement mittels eines Bajonettverschlusses eingesetzt und gehalten ist.

In der Zuleitung zu dem Verschlusselement 14 befindet sich ein federbelastetes Kugeldruckstück, welches einem Druck bis zu 5 bar standhält und bei Erreichen des Nenndrucks öffnet. Zweck des Ventils ist es, zum einen den Eintritt von Wasser in die Brühgruppe vor Erreichen der Nenntemperatur und zum anderen das Austreten von Dampf durch die Brühgruppe bei geöffnetem Dampfweg zu vermeiden.

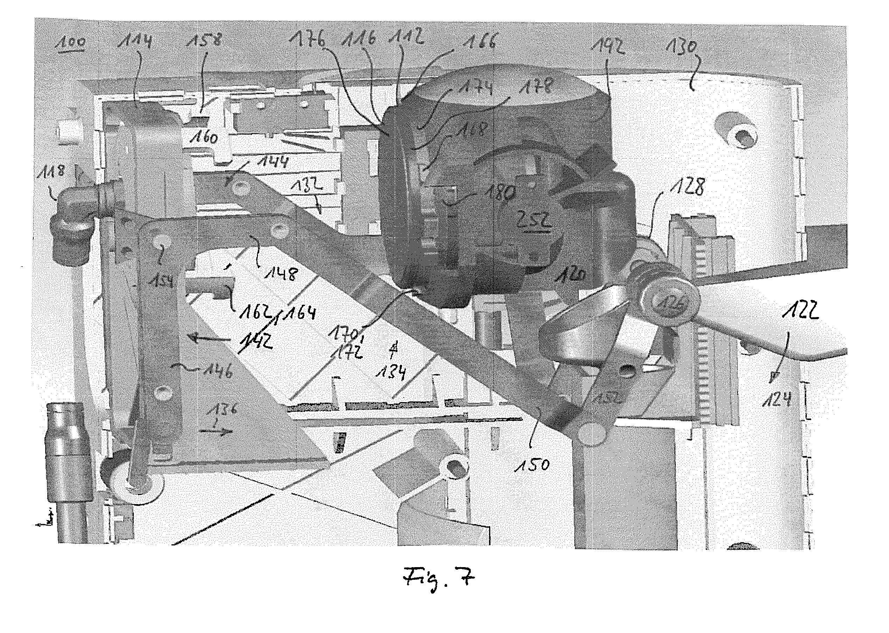

Fig. 7 zeigt eine perspektivische Schnittdarstellung in Seitenansicht eines Abschnitts einer Vorrichtung 100 zur portionsweisen Herstellung eines Aromagetränks, insbesondere Espresso oder Kaffee, umfassend eine Brühkammer mit einem Aufnahmeteil 112 zur Aufnahme einer mit einem Aromaträger gefüllten Kapsel 116 und einem Verschlussteil 114, wobei das Aufnahmeteil 112 und das Verschlussteil 114 relativ zueinander bewegbar angeordnet und aus einer Öffnungsstellung in eine Schließstellung bringbar sind, wobei die Brühkammer nach dem Schließen bis zu einem Zulauf 118 für Heißwasser zur Extraktion des Aromaträgers und einem Auslauf 120 für das Aromagetränk allseitig abgedichtet ist.

Das Aufnahmeteil 112 für die Kapsel 116 ist aus einer horizontalen Grundstellung in eine in Fig. 7 dargestellte vertikale Stellung verschwenkbar. Das Verschwenken aus der Grundstellung in die vertikale Stellung erfolgt durch einen Hebel 122 aus einer in Fig. 7 nicht dargestellten Ausgangsstellung in die in Fig. 7 dargestellte Zwischenstellung.

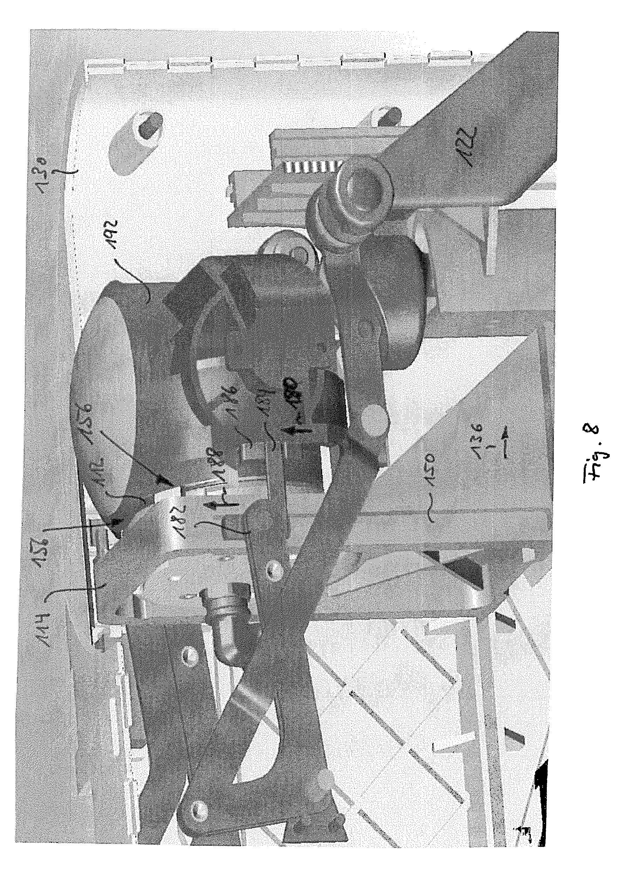

Ausgehend von der in Fig. 7 dargestellten Mittelstellung des Hebels 150 wird durch Betätigung des Hebels 122 in Richtung des Pfeils 124 das Verschlussteil 114 zum Verschließen der Brühkammer in Richtung des Aufnahmeteils 112 linear verschoben, bis der Hebel 122 die in Fig. 8 dargestellte Endstellung erreicht hat.

Der Hebel 122 ist über zwei Drehlager 126, 128 in einem Gehäuse 130 gelagert. Ausgehend von den Drehlagern 126, 128 ist der Hebel über Hebelmechanismen 132, 134 mit dem Verschlussteil 114 gekoppelt. Durch eine Bewegung des Hebels 122 in Richtung des Pfeils 124 erfolgt eine Linearbewegung des Verschlussteils 114 in Richtung des Pfeils 136. Das Verschlussteil 114 ist dabei beidseitig in Führungen 140 des Gehäuses 130 geführt.

Die Hebelmechanismen 132, 134 umfassen jeweils einen Kniehebel 142, 144, mit einem längeren Hebelarm 146, welcher vorzugsweise in einer vertikal verlaufenden Nut des Verschlussteils 114 angeordnet ist. Ferner umfasst der Kniehebel 142 einen kurzen Hebelarm 148, der über einen Schieber 150 mit einem von dem Lager 128, 126 ausgehenden Ausleger 152 gekoppelt ist. Der Kniehebel 142, 144 ist in dem Gehäuse 130 über jeweils ein Lager 154 drehfest gelagert. Achspunkte der Hebelmechanismen 132, 134 verlaufen parallel.

Fig. 8 zeigt eine perspektivische Darstellung der Brühgruppe in geschlossenem Zustand. Um einem Extraktionsdruck von maximal 19 bar standzuhalten, werden an die Festigkeit der Brühkammern sowie die Parallelität der angrenzenden Flächen insbesondere zwischen Verschlussteil 114, Kapsel 116 sowie Aufnahmeteil 112 hohe Anforderungen gestellt. Daher werden Verriegelungsteil 114 und Aufnahmeteil 112 im geschlossenen Zustand über ein Verschlusssystem 156 gekoppelt.

Das Verschlusssystem 156 umfasst von dem Verschlussteil 114 sich in Richtung des Aufnahmeteils 112 erstreckende vorzugsweise hakenförmige Verschlusselemente 158, 160, 162, 164, welche mit sich von dem Aufnahmeteil 112 radial erstreckende Zapfen 166, 168, 170, 172 kraft- und formschlüssig verschließbar sind.

Die Zapfen 166, 168, 170, 172 erstrecken sich radial von einem Verschlussring 174, welcher im Öffnungsbereich 176 des Aufnahmeteils 112 drehbar gelagert ist.

Der Verschlussring 174 ist dabei zwischen einem nach außen umlaufenden Rand 178 und einem Haltering 180 drehbar gelagert. Ferner ist der Verschlussring 174 gegenüber dem Aufnahmeteil 112 federvorgespannt und aus einer Ausgangsstellung in eine Endstellung und zurück bewegbar.

Wie in Fig. 8 dargestellt, greift bei der linearen Vorwärtsbewegung entlang des Pfeils 136 ein von einem in der Nut 150 gelagerten Ende 182 des Kniehebels angeordnetes Eingriffsmittel 184 wie Finger in eine von dem Verschlussring ausgehende Aufnahme 186 ein, wobei in einer Schlussphase der Bewegung des Hebels 122 das Verschlussteil 114 gegen das Aufnahmeteil 112 gepresst und durch eine weitere Bewegung des Endes 184 in Richtung des Pfeils 188, der durch die Nut 150 vorgegeben ist, die Drehbewegung des Verschlussrings 186 in Richtung des Pfeils 190 ausgeführt wird.

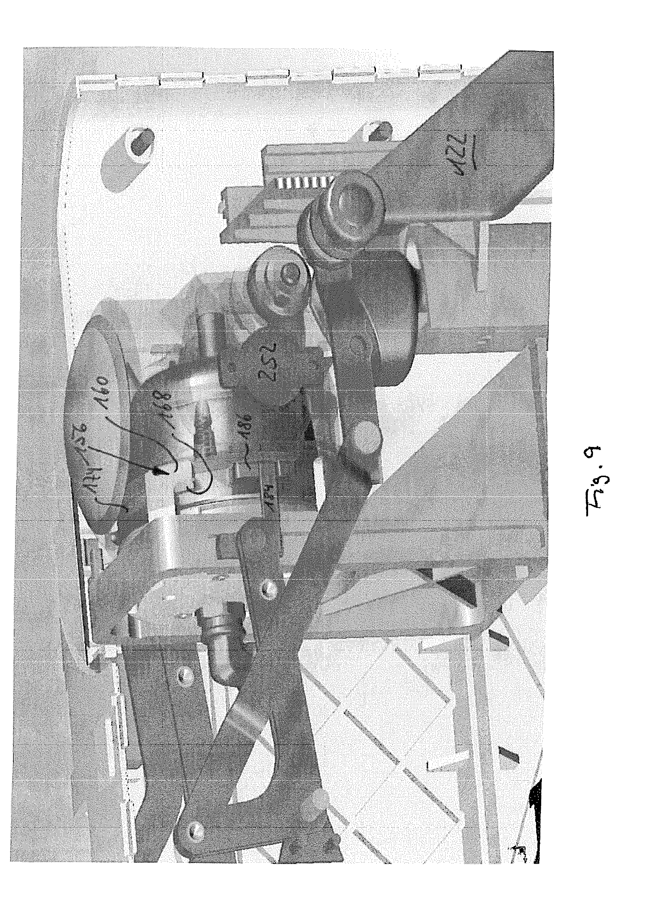

Die in dieser Art und Weise verriegelte Brühgruppe ist in perspektivischer Darstellung der Fig. 9 zu entnehmen. Dabei greifen die Zapfen 166, 168, 170, 172 jeweils in die korrespondierenden Hakenelemente 156, 158, 160, 162 ein. In bevorzugter Ausführung ist die Aufnahme 168 gabelförmig ausgebildet. Beim Öffnen der Brühgruppe wird der Hebel 122 nach oben bewegt, wobei zunächst eine Kraft auf das Verschlussteil 114 ausgeübt wird, die ein Öffnen des Verschlusses erleichtert. Anschließend wird der Finger nach unten bewegt, wodurch der Verschlußring in entgegengesetzter Richtung bewegt wird und die Verschlusselemente freigibt.

In der hier dargestellten Ausführungsform ist das Aufnahmeteil 112 in einer schwenkbaren Halterung 192 aufgenommen. In der Halterung 192 ist die Aufnahme 112 in axialer Richtung federvorgespannt verschiebbar. Dabei weist das Aufnahmeteil 112 bodenseitig eine Durchbrechung für einen von der Bodenfläche der Halterung ausgehenden Anstechdorn auf. Dadurch wird erreicht, dass beim Einlegen der Kapsel 116 dieser allseitig mit seiner Rand- und Bodenfläche bündig an den Innenflächen des Aufnahmeteils anliegt und erst beim Zusammenführen von Aufnahmeteil 112 und Verschlussteil 114 ein Anstechen der Bodenseite der Kapsel 116 erfolgt.

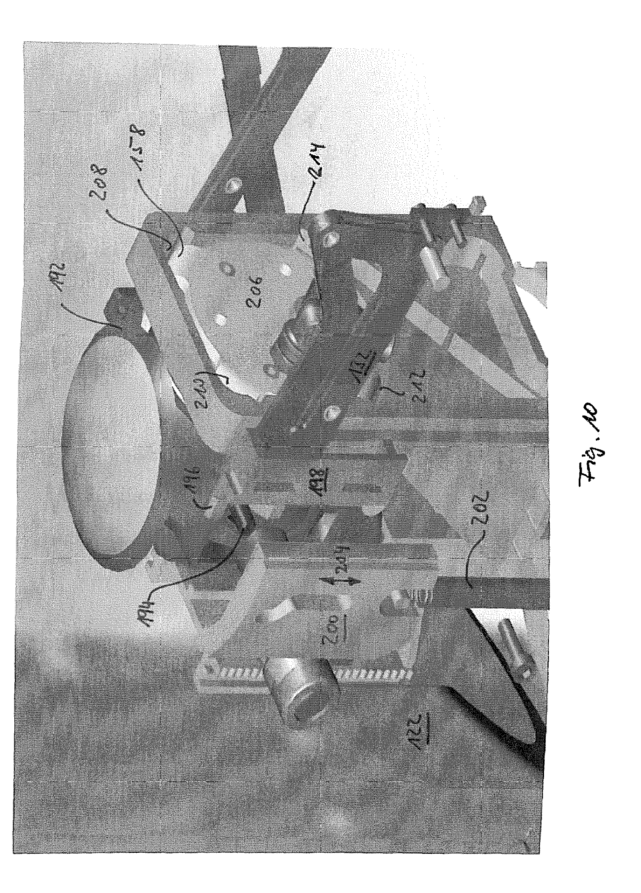

In Fig. 10 ist dargestellt, dass die Halterung 192 in ihrer geschwenkten Stellung mittels eines Verriegelungselementes 194 wie Bolzen verriegelbar ist. Dazu ist an dem Gehäuse ein Federelement 196 wie Blattfeder angeordnet, welches mit dem Bolzen 194 zusammenwirkt und diesen in axialer Richtung vorspannt. Der Bolzen greift mit einem ersten Ende in eine Öffnung der Halterung und mit seinem zweiten Ende in eine Öffnung des Gehäuses ein. Um die Halterung 192 zu entriegeln, ist ein Entriegelungselement 198 vorgesehen, welches über den Hebelmechanismus 132 betätigbar ist und unmittelbar nach dem Öffnen der Brühkammer die Halterung 192 entriegelt, so dass diese in ihre Ausgangsstellung zurückschwenken kann.

Zum Schwenken der Halterung 192 ist anzumerken, dass sowohl das Schwenken in die vertikale Stellung als auch das Rückschwenken in die horizontale Stellung schnell und kurzfristig erfolgt, wozu lediglich ein geringer Winkelweg des Hebels 122 notwendig ist.

Die Drehung der Halterung 192 erfolgt über eine Kulisse 200, die mittels eines Federelementes 202 federvorgespannt ist und welche in Richtung des Pfeils 204 ebenfalls mittels des Hebelmechanismus 132 bewegbar ist.

Der Fig. 10 ist ebenfalls zu entnehmen, dass die Verschlusshaken 158, 160, 162, 164 von einer Hakenplatte 206 ausgehen, die auf einer Rückseite des Verschlussteils 114 bündig anliegt. Dabei sind in dem Verschlussteil 114 Durchbrechungen 208. 210, 212, 214 für jeweils die Verschlusshaken 158, 160, 162, 164 eingebracht, so dass notwendige Festigkeit sowie Parallelität der angrenzenden Flächen gewährleistet ist.

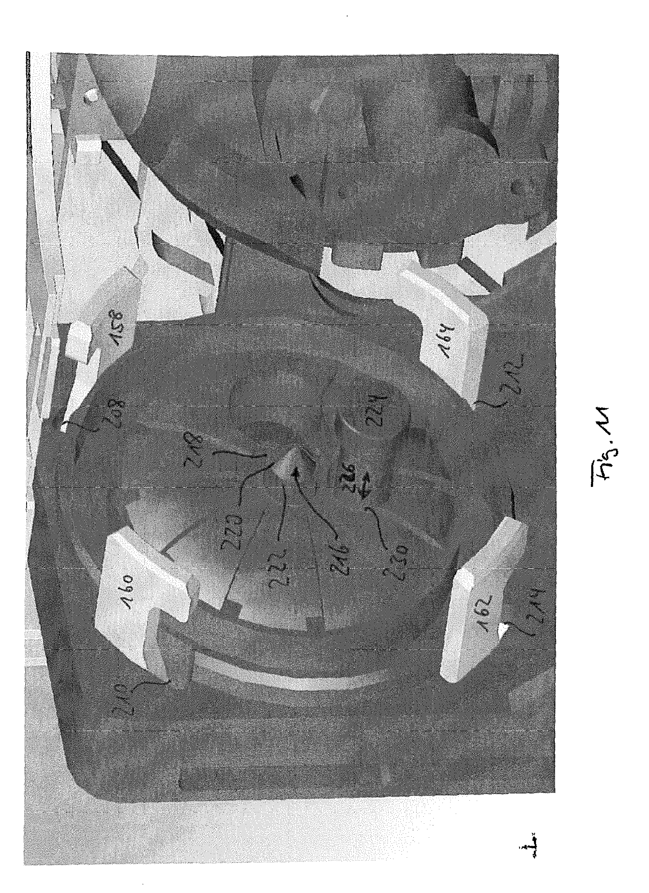

Der Fig. 11 ist die in dem Verschlussteil 114 angeordnete Anstechspitze 216 dargestellt, welche eine im Wesentlichen kegelförmige Spitze 218 mit einem Längsschlitz 220 aufweist, in dem eine Klinge (nicht dargestellt) aufnehmbar ist. Die Spitze 216 ist auf einem Sockel 222 mit geringeren Durchmesser angeordnet und bildet somit einen Widerhaken.

Unterhalb der Anstechspitze 216 ist ein Auswerfer 224 angeordnet, der in Richtung des Pfeils 226 axial in dem Verschlussteil 114 verschiebbar angeordnet ist. Bei einer Bewegung zum Aufnahmeteil 112, d. h. beim Verschließen der Brühkammer liegt ein Kopf 228 des Auswerfers im Wesentlichen bündig in einer Aussparung 230 des Verschlussteils 114 an, während beim Öffnen der Brühkammer der Auswerfer 224 gegen einen Anschlag führt und somit die durch die Anstechspitze aus dem Aufnahmeteil 112 entnommene Kapsel von der Anstechspitze abstreift, so dass die Kapsel in einen Aufnahmebehälter fällt.

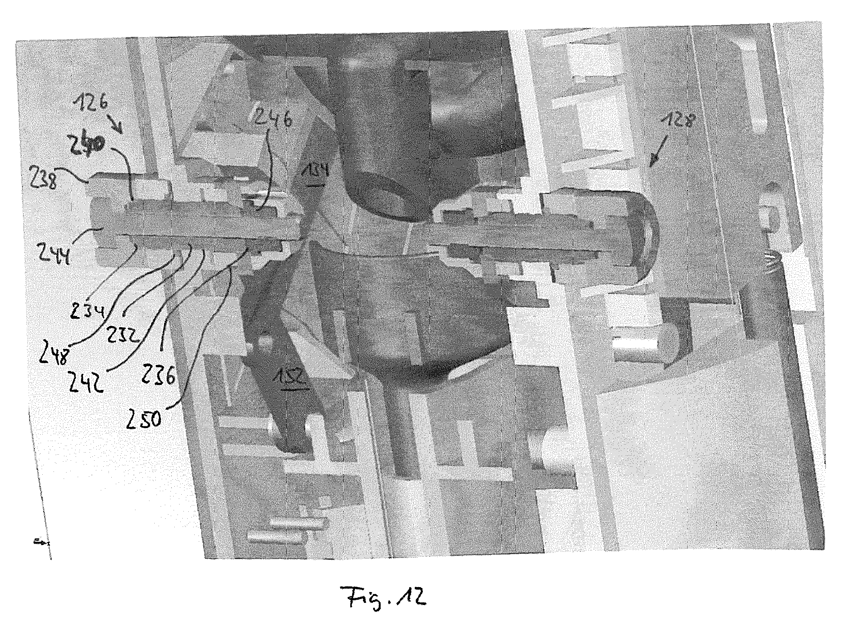

Fig. 12 zeigt in perspektivischer Darstellung die Lager 126, 128 für den Hebel 122.

Im Folgenden wird der Aufbau des Lagers 126 beschrieben, dessen Aufbau im Wesentlichen identisch ist mit dem Lager 128.

Kernstück des Lagers 126 ist eine Konuslagerhülse 232, die an ihren Stirnseiten jeweils eine konusförmige Fläche 234, 236 aufweist. Die Konusfläche 234 korrespondiert mit einer in einem Hebelauge 238 innenseitig angeordneten Konusfläche 240 in eine form- und kraftschlüssige Verbindung zwischen Konuslagerhülse 232 und Hebel 122 zu erreichen. Das Konuslager 232 selbst ist in einer Gehäuseöffnung 242 des Gehäuses drehbar gelagert. Die Konusfläche 236 des Konuslagers 234 ist form- und kraftschlüssig mit dem Hebelarm 152 verbunden, der dem Hebelmechanismus 134 zugeordnet ist. Über die Konushülse 232 wird eine spielfreie Kopplung zwischen Hebel 122 und Hebelmechanismus 134, 132 gewährleistet.

Das Hebelauge 238, Konushülse 232 und der Hebelarm 152 sind sodann über ein Verbindungselement 244 in axialer Richtung verspannt, wobei das Verbindungselement 244 als Schraube ausgebildet ist, welche in eine Mutter 246 eingreift. Um die Spielfreiheit der Lage 126, 128 des Weiteren zu verbessern, sind zwischen Gehäuseaußenwand und Hebelauge 238 sowie zwischen Gehäuseinnenwand und Hebelabschnitt 152 jeweils ein O-Ring 248, 250 angeordnet.

Durch die Spielfreiheit der Lager 126, 128 in axialer Richtung wird eine synchrone Bewegung der Hebelmechanismen 132, 134 sichergestellt, was wiederum eine lineare Bewegung des Verschlusselementes und somit ein sicheres Verschließen der Brühgruppe zur Folge hat. Durch die Konusverbindung zwischen Konushülse 232 und Hebel 122 wird auch eine Spielfreiheit, bezogen auf die innere Kinematik, d. h. die Hebelmechanismen 132, 134 sichergestellt.

Schließlich ist noch zu erwähnen, dass die Kapselhalterung 192 mit einem Rotationsdämpfer 252 gekoppelt ist, welcher die Schwenkbewegung des Kapselhalters dämpft.

## Patentansprüche

1. Vorrichtung (10, 100) zur portionsweisen Herstellung eines Aromagetränks, insbesondere Espresso oder Kaffee, umfassend eine Brühkammer mit einem Aufnahmeteil (12, 112) zur Aufnahme einer mit einem Aromaträger gefüllten Kapsel (16, 116) und einem Verschlussteil (14, 114), wobei das Aufnahmeteil (12, 112) und das Verschlussteil (14, 114) relativ zueinander bewegbar angeordnet und aus einer Öffnungsstellung in eine Schließstellung bringbar sind, wobei die Brühkammer nach dem Schließen bis zu einem Zulauf (42, 118) für Heißwasser zur Extraktion des Aromaträgers und einem Auslauf (34, 120) für das Aromagetränk allseitig abgedichtet ist,
**dadurch gekennzeichnet,**
**dass** das Aufnahmeteil (12, 112) für die Kapsel (16, 116) aus einer horizontalen Grundstellung in eine vertikale Stellung verschwenkbar ist, dass das Verschlussteil (14, 114) zum Verschließen der Brühkammer in Richtung des Aufnahmeteils (12,112) linear verschiebbar angeordnet ist und dass die Kapsel (16, 116) nach dem Öffnen der Brühkammer durch ein an dem Verschlussteil (14, 114) angeordnetes Mittel (68, 216) erfassbar und durch eine lineare Rückbewegung aus dem Aufnahmeteil (12, 112) entnehmbar und sodann in einen Aufnahmebehälter (70) auswerfbar ist.

2. Vorrichtung nach Anspruch 1,
**dadurch gekennzeichnet,**
**dass** das Aufnahmeteil (12, 112) über einen ersten Hebelmechanismus (48, 200) in Form einer Kulisse mit einem Hebel (50, 112) gekoppelt ist, wobei durch Betätigen des Hebels (50, 112) zunächst die Schwenkbewegung des Aufnahmeteils (12, 112) einleitbar ist und dass der Hebel (50, 122) über einen zweiten Hebelmechanismus (52, 132, 134) mit dem Verschlussteil (14, 114) gekoppelt ist, wobei eine weitere Betätigung des Hebels (50, 122) eine lineare Bewegung des Verschlussteils (14, 114) in Richtung des Aufnahmeteils (12) zum Verschließen der Brühkammer bewirkt und wobei eine Rückbewegung des Hebels (50, 122) das Öffnen der Brühkammer und die erneute Rückbewegung des Verschlussteils (14, 114) und die Schwenkbewegung des Aufnahmeteils (12, 112) in die Grundstellung bewirkt.

3. Vorrichtung nach Anspruch 1 oder 2,
**dadurch gekennzeichnet,**
**dass** das Verschlussteil (114) im geschlossenen Zustand über ein Verschlusssystem (156) mit dem Aufnahmeteil (112)) gekoppelt ist.

4. Vorrichtung nach zumindest einem der vorhergehenden Ansprüche,
**dadurch gekennzeichnet,**
**dass** das Verschlusssystem (156) sich von dem Verschlussteil (114) in Richtung des Aufnahmeteils (122) erstreckende vorzugsweise hakenförmige Verschlusselemente (158, 160, 162, 164) aufweist, welche mit von der Aufnahme sich radial erstreckenden Zapfen (166, 168, 170, 172) eine kraft- und formschlüssige Verbindung bilden.

5. Vorrichtung nach zumindest einem der vorhergehenden Ansprüche,
**dadurch gekennzeichnet,**
**dass** die Zapfen (166, 168, 170, 172) sich radial von einem Verschlussring (174) erstrecken, welcher vorzugsweise im öffnungsseitigen Randbereich (176) des Aufnahmeteils (112) drehbar gelagert ist.

6. Vorrichtung nach zumindest einem der vorhergehenden Ansprüche,
**dadurch gekennzeichnet,**
**dass** der Verschlussring (174) zwischen einem außen umlaufenden Rand (178) des Aufnahmeteils (112) und einem Haltering (180) drehbar gelagert ist, wobei der Verschlussring (174) in Öffnungsrichtung federvorgespannt.

7. Vorrichtung nach zumindest einem der vorhergehenden Ansprüche,
**dadurch gekennzeichnet,**
**dass** der mit dem Verschlussteil (114) gekoppelte zweite Hebelmechanismus (134, 142) ein Eingriffsmittel (184) wie Finger aufweist, welches während der linearen Vorwärtsbewegung in eine Aufnahme (186)wie Gabel des Verschlussrings (174) eingreift und eine Drehung des Verschlussrings derart bewirkt, dass die Zapfen in die hakenförmigen Verschlusselemente eingreifen.

8. Vorrichtung nach zumindest einem der vorhergehenden Ansprüche,
**dadurch gekennzeichnet,**
**dass** der das Verschlussteil (14, 114) mit dem Hebel (50, 122) koppelnde Hebelmechanismus als Kniehebel (60, 142) ausgebildet ist.

9. Vorrichtung nach zumindest einem der vorhergehenden Ansprüche,
**dadurch gekennzeichnet,**
**dass** der Kniehebel (142) einen kurzen Hebelarm (148) aufweist, welcher über einen Schieber (150) und einen Ausleger (152) mit dem Hebel (122) verbunden ist und einen längeren Hebelarm (146), welcher über vorzugsweise einen Nutstein (148) in einer vertikal verlaufenden Nut (150) des Verschlussteils angeordnet ist, wobei an einem in der Nut verlaufenden Ende des längeren Hebelarms das Eingriffsmittel (184) wie Finger angeordnet ist, welcher in die Aufnahme (186) wie Gabel des Verschlussrings (174) eingreift.

10. Vorrichtung nach zumindest einem der vorhergehenden Ansprüche,
**dadurch gekennzeichnet,**
**dass** die Heranführung des Verschlussteils (14, 114) an das Aufnahmeteil (12, 112) nach dem Schwenken dieses zeitverzögert erfolgt.

11. Vorrichtung nach zumindest einem der vorhergehenden Ansprüche,
**dadurch gekennzeichnet,**
**dass** sowohl in dem Aufnahmeteil (12, 112) als auch in dem Verschlussteil (14, 114) jeweils ein Anstechdorn (32, 38, 216) für das Aufstechen der Kapsel an deren Ober- und Unterseite vorgesehen ist.

12. Vorrichtung nach zumindest einem der vorhergehenden Ansprüche,
**dadurch gekennzeichnet,**
**dass** das Aufnahmeteil (112) in einer schwenkbaren Halterung (192) entlang einer Längsachse federvorgespannt verschiebbar aufgenommen ist, wobei das Aufnahmeteil (112) bodenseitig eine Durchbrechung für den von einer Bodenfläche der Halterung ausgehenden Anstechdorn aufweist und wobei eine Spitze des Anstechdorns in geöffneter Stellung der Brühkammer unterhalb des Bodenniveaus der Aufnahme und in geschlossener Stellung innerhalb des Aufnahmeteils beim Anstechen bzw. Aufstechen des Kapselbodens angeordnet ist.

13. Vorrichtung nach zumindest einem der vorhergehenden Ansprüche,
**dadurch gekennzeichnet,**
**dass** an dem Verschlussteil (14, 114) Mittel (68, 206) zum Entnehmen der Kapsel (16, 116) aus dem Aufnahmeteil (12, 112) angeordnet sind.

14. Vorrichtung nach zumindest einem der vorhergehenden Ansprüche,
**dadurch gekennzeichnet,**
**dass** die Mittel (68, 206) zum Entnehmen der Kapsel als Widerhaken ausgebildet sind.

15. Vorrichtung nach zumindest einem der vorhergehenden Ansprüche,
**dadurch gekennzeichnet,**
**dass** das Verschlussteil (14, 114) einen Anschluss (42) für eine Zulaufleitung für Heißwasser aufweist und dass das Aufnahmeteil (12, 112) einen Anschluss (34) für eine Ablaufleitung für das Aromagetränk aufweist.

16. Vorrichtung nach zumindest einem der vorhergehenden Ansprüche,
**dadurch gekennzeichnet,**
**dass** die Halterung (192) in ihrer geschwenkten Stellung mittels eines Verriegelungselementes (194) wie Bolzen verriegelbar ist und dass ein Entriegelungselement (198) vorgesehen ist, mit dem die Halterung (192) unmittelbar nach Entnahme der Kapsel entriegelbar und in ihre Ausgangsstellung zurückschwenkbar ist.

17. Vorrichtung nach zumindest einem der vorhergehenden Ansprüche,
**dadurch gekennzeichnet,**
**dass** der Bolzen (194) axial verschiebbar und mittels eines Federelementes (196) wie Blattfeder federvorgespannt angeordnet ist, wobei ein erstes Ende des Bolzens (194) in eine Gehäuseöffnung und ein zweites Ende des Bolzens in eine Öffnung der Halterung eingreift und dass die Blattfeder mittels dem mit dem zweiten Hebelmechanismus gekoppelten Entriegelungselement (198) entriegelbar ist.

18. Vorrichtung nach zumindest einem der vorhergehenden Ansprüche,
**dadurch gekennzeichnet,**
**dass** die Verschlusselemente (158, 10, 162, 164) von einer Platte (206) ausgehen, wobei in dem Verschlussteil randseitig zur Durchführung der Verschlusselemente Durchbrechungen eingebracht sind und wobei die Platte, von der die Haken ausgehen, auf einer Rückseite des Verschlussteils anliegt.

19. Vorrichtung nach zumindest einem der vorhergehenden Ansprüche,
**dadurch gekennzeichnet,**
**dass** das Verschlussteil zumindest einen Auswerfer (224) in Form eines axial verschließbaren Stößels aufweist, welcher bei der Bewegung zum Aufnahmeteil hin bündig mit einer Oberfläche des Verschlussteils abschließt und bei einer Rückbewegung des Verschlussteils gegen Ende der Bewegung gegen einen Anschlag anstößt, wodurch die Kapsel von dem Anstechdorn abgestreift wird.

20. Vorrichtung nach zumindest einem der vorhergehenden Ansprüche,
**dadurch gekennzeichnet,**
**dass** der zumindest eine Auswerfer (224) unterhalb und/oder oberhalb des Anstechdorns (216) angeordnet ist.

21. Vorrichtung nach zumindest einem der vorhergehenden Ansprüche,
**dadurch gekennzeichnet,**
**dass** der Anstechdorn (216) eine kegelförmige Spitze (218) mit einem Längsschnitt (220) aufweist, in dem eine Klinge, vorzugsweise dreieckförmige Klinge, aufnehmbar ist, oder dass die Klinge einstückiger Bestandteil der Spitze (218) ist.

22. Vorrichtung nach zumindest einem der vorhergehenden Ansprüche,
**dadurch gekennzeichnet,**
**dass** die Spitze (218) mit Klinge als Widerhaken als ausgebildet ist.

23. Vorrichtung nach zumindest einem der vorhergehenden Ansprüche,
**dadurch gekennzeichnet,**
**dass** der Hebel (122) über eine Konuslagerhülse (232) spielfrei und kraftschlüssig mit dem ersten Hebelmechanismus kraftschlüssig gekoppelt ist, wobei jeweils eine erste Konusfläche (234) der Konuslagerhülse in eine Konusfläche (240) eines Hebelauges des Hebels und eine zweite Konusfläche (236) in eine korrespondierende Konusfläche des Hebelmechanismus (152) eingreift.

24. Vorrichtung nach zumindest einem der vorhergehenden Ansprüche,
**dadurch gekennzeichnet,**
**dass** die Konuslagerhülse (232) über ein Spannelement (244) wie Spannschraube axial fixiert ist.

25. Verfahren zur portionsweisen Herstellung eines Aromagetränks insbesondere von Espresso oder Kaffee, wobei eine mit einem Aromaträger gefüllte Kapsel in ein Aufnahmeteil einer Brühkammer eingelegt und sodann die Brühkammer mittels eines Verschlussteils verschlossen wird, wobei das Verschließen und Öffnen der Brühkammer durch Relativbewegung des Aufnahmeteils und des Verschlussteils zueinander erfolgt und wobei die Brühkammer nach dem Schließen bis auf einen Zulauf für Heißwasser zur Extraktion des Aromagetränks und einen Auslauf für das Aromagetränk allseitig abgedichtet ist,
**dadurch gekennzeichnet,**
**dass** das Aufnahmeteil (12, 112) für die Kapsel (16, 116) aus einer horizontalen Grundstellung mittels eines Hebels (50, 122) in eine vertikale Stellung geschwenkt wird, dass das Verschlussteil (14, 114) zum Verschließen der Brühkammer in Richtung des Aufnahmeteils (12, 112) linear verschoben wird und dass das Verschlussteil (14, 114) durch Rückbewegung des Hebels nach dem Brühvorgang in einer Linearbewegung von dem Aufnahmeteil (12, 112) wegebewegt wird, dass die Kapsel (16, 116) nach dem Öffnen der Brühkammer durch an dem Verschlussteil (14, 114) angeordnete Mittel (68, 216) erfasst und durch eine lineare Rückbewegung des Verschlussteils aus dem Aufnahmeteil entnommen und sodann in einen Aufnahmebehälter ausgeworfen wird.

26. Verfahren nach Anspruch 25,
**dadurch gekennzeichnet,**
**dass** die Heranführung des Verschlussteils (14, 114) an das Aufnahmeteil (12, 112) nach dem Schwenken dieses zeitverzögert erfolgt.

27. Verfahren nach Anspruch 25 oder 26,
**dadurch gekennzeichnet,**
**dass** die Extraktion des Aromagetränks bei einem Druck im Bereich von 5 bar bis 20 bar, vorzugsweise 10 bar erfolgt.
